# EUROPEAN PATENT SPECIFICATION

(11) **EP 3 992 485 B1**
(45) Date of publication and mention of the grant of the patent: **25.06.2025**
(21) Application number: 21198639.3
(22) Date of filing: 23.09.2021
(51) Int. Cl.: F16D 55/224, B61H 5/00, F16D 65/18, B61H 13/34

(54) **BRAKE CALIPER**
BREMSSATTEL
ÉTRIER DE FREIN

(30) Priority: 28.10.2020 JP 2020180841
(43) Date of publication of application: 04.05.2022
(73) Proprietor: NABTESCO CORPORATION, Chiyoda-ku Tokyo 102-0093 (JP)
(72) Inventor: Utsumi, Takashi, Tokyo (JP)
(74) Representative: Grünecker Patent- und Rechtsanwälte PartG mbB

(56) References cited:
- WO-A1-2012/123318
- DE-U1- 29 515 260
- JP-A- 2009 115 214
- US-A1- 2017 058 977

## Description

The present invention relates to a brake caliper.

JP 2010 - 164 183 A discloses a brake caliper for applying a braking force to a wheel of a railway vehicle by forcing a brake pad against a disc that rotates integrally with the wheel. The brake caliper includes a cylinder device workable with a fluid such as compressed air and a caliper lever connected to the cylinder device and rotatable by the cylinder device such that the brake pad approaches or separates away from the disc.

DE 295 15 260 U1 discloses a brake caliper according to the preamble of claim 1 and claims 2.

The brake caliper is rotatably attached to a bogie, so that the disc and brake pad remain parallel to each other even if the bogie becomes inclined relative to the axle while the railway vehicle travels. With such arrangement, however, the brake caliper may be undesirably rotated by the vibration generated during the traveling of the railway vehicle. As a result, the brake pads may touch the disc even though no brake force is generated or no braking is applied. The same problem may arise in brake calipers used in disc brake devices used in industrial vehicles including not only railway vehicles but also trucks, buses, and vehicles for work at high level.

It is an object of the present invention to provide a brake caliper that makes it difficult for the body to rotate relative to the bracket. According to the present invention said object is solved by a brake caliper having the features of the independent claim 1. Said object is solved by a brake caliper having the features of the independent claim 2. Preferred embodiments are laid down in the dependent claims.

A brake caliper includes a pair of caliper levers, where each caliper lever retains a brake pad, an actuator for outputting a force to rotate the caliper levers such that the caliper levers press a disc, a body retaining the caliper levers in a rotatable manner and retaining the actuator, a bracket fixedly attached to a bogie, a coupling pin coupling the body to the bracket such that the body and the bracket are rotatable relative to each other around a rotational axis extending in a longitudinal direction of the caliper levers, and a friction applying unit penetrated by the coupling pin, the friction applying unit being configured to restrain rotation of the body by generating sliding friction at a contact surface of the friction applying unit where the friction applying unit touches the body or the bracket.

With such a design, the friction applying unit generates a frictional force against the relative rotation between the body and the bracket, making it difficult for the body to rotate relative to the bracket. This prevents unintended contact between the brake pads and the disc when the brake is not in operation. In addition, since the friction applying unit penetrated by the coupling pin generates sliding friction at the contact surface in the axial direction surrounding the coupling pin and prevents the rotation, friction is applied in a more stabilized manner than in a case where friction is applied only at part of the body or bracket.

A brake caliper includes a pair of caliper levers, where each caliper lever retains a brake pad, an actuator for outputting a force to rotate the caliper levers such that the caliper levers press a disc, a body retaining the caliper levers in a rotatable manner and retaining the actuator, a bracket fixedly attached to a bogie, a coupling pin supporting the body such that the body is rotatable relative to the bracket around a rotational axis extending in a longitudinal direction of the caliper levers, and a friction applying unit configured to restrain rotation of the coupling pin by generating sliding friction at a contact surface of the friction applying unit where the friction applying unit touches an end of the coupling pin in an axial direction, wherein the friction applying unit is provided in the body or the bracket.

With such a design, the friction applying unit generates a frictional force against the rotation relative to the coupling pin, thereby making it difficult for the body to rotate relative to the bracket. This prevents unintended contact between the brake pads and the disc when the brake is not in operation. In addition, since the friction applying unit generates sliding friction at the contact surface of the friction applying unit where the friction applying unit touches the end of the coupling pin in the axial direction and prevents the rotation, friction is applied in a more stabilized manner than in a case where friction is applied only at part of the body or bracket.

The present invention prevents unintended contact between brake pads and a disc while no braking is applied.

### BRIEF DESCRIPTION OF THE DRAWINGS

Fig. 1 is a perspective view showing a first embodiment of the brake caliper.
Fig. 2 is across sectional view showing the first embodiment of the brake caliper.
Fig. 3 is an exploded perspective view showing the first embodiment of the brake caliper.
Fig. 4 is a back view showing the first embodiment of the brake caliper.
Fig. 5 is an exploded perspective view showing a bracket, a coupling pin, and a body of the first embodiment of the brake caliper.
Fig. 6 is a longitudinal sectional view showing the bracket, coupling pin and body of the first embodiment of the brake caliper.
Fig. 7 is a longitudinal sectional view showing a friction applying unit of a second embodiment of the brake caliper.
Fig. 8 is a longitudinal sectional view showing a friction applying unit of a third embodiment of the brake caliper.
Fig. 9 is a longitudinal sectional view showing a friction applying unit of a fourth embodiment of the brake caliper.
Fig. 10 is a longitudinal sectional view showing a friction applying unit of a fifth embodiment of the brake caliper.
Fig. 11 is a longitudinal sectional view showing a friction applying unit of a sixth embodiment of the brake caliper.

### DESCRIPTION OF THE PREFERRED EMBODIMENTS

### <First Embodiment>

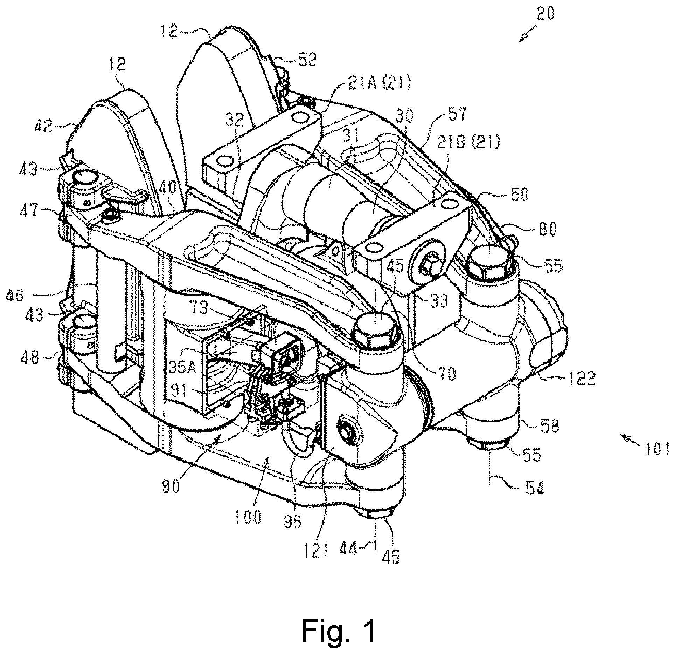

With reference to Figs. 1 to 6, a first embodiment of a brake caliper will now be described.

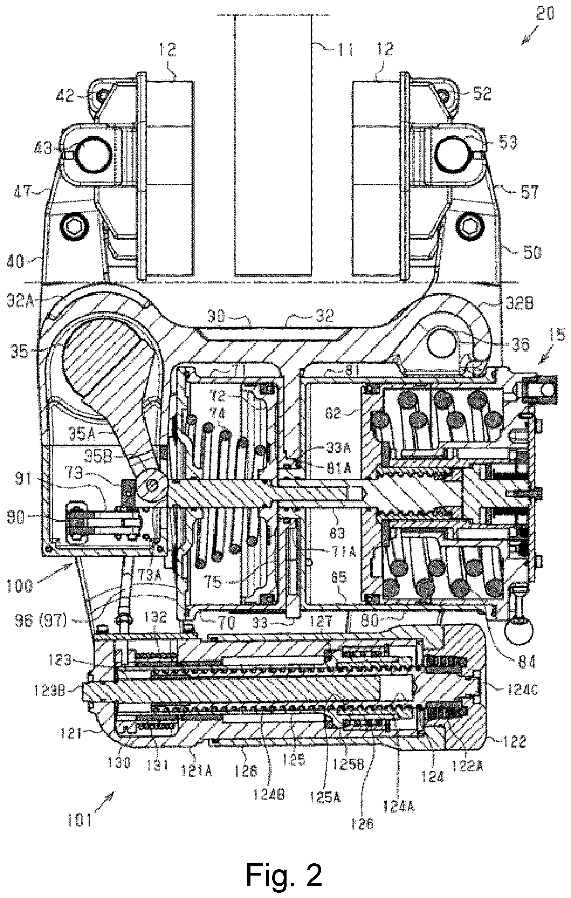

As shown in Figs. 1 and 2, a brake caliper 20 is mounted to a bogie (not shown) of a railway vehicle and configured to apply a braking force to a wheel of the bogie by pressing brake pads 12 against a disc 11 (see Fig. 2) rotating integrally with an axle rotating the wheel. The brake caliper 20 and the disc 11 together constitute a disc brake device.

The brake caliper 20 includes a bracket 21 (see Fig. 1) mounted to the bogie, a body 30 rotatably hung on the bracket 21, and a pair of left and right caliper levers 40 and 50 held by the body 30. The body 30 retains the pair of left and right caliper levers 40 and 50 turnably, so that the brake pads 12 are movable to a position where they sandwich the disc 11 and a position where they do not sandwich the disc 11.

The brake caliper 20 also includes a cylinder device 15 for outputting a force through compressed air fed thereto and discharged therefrom, and the force causes the left and right caliper levers 40 and 50 to sandwich the disc 11 via the brake pads 12. The compressed air fed to the cylinder device 15 is taken from a tank installed on the railway vehicle. The cylinder device 15 is removably mounted to the body 30. Here, the cylinder device 15 corresponds to an actuator.

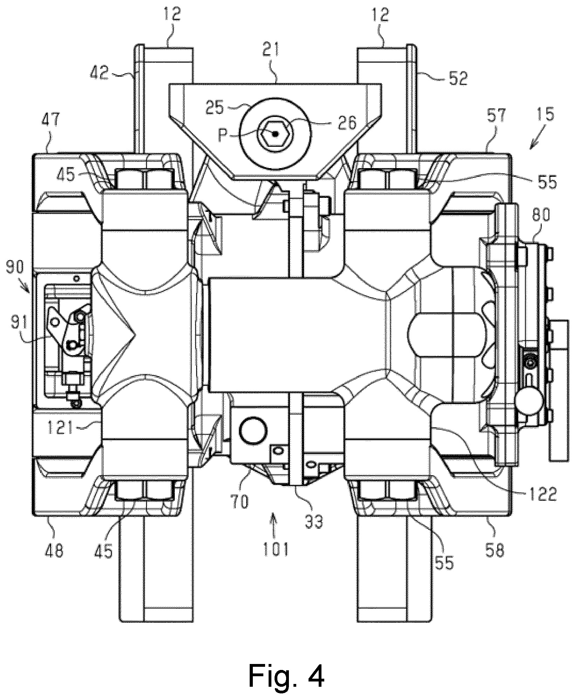

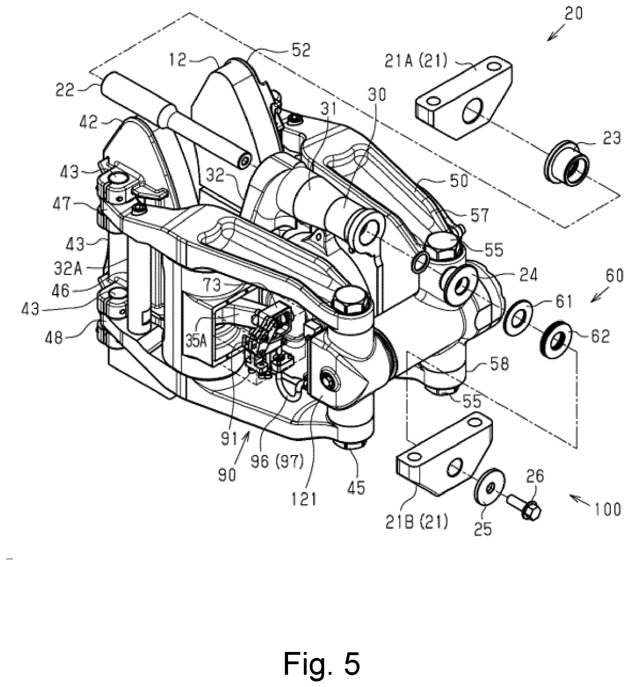

As shown in Fig. 5, the bracket 21 includes a first bracket 21A and a second bracket 21B. The body 30 is disposed between the first bracket 21A and the second bracket 21B. A coupling pin 22 penetrates through the first bracket 21A, the body 30, and the second bracket 21B to couple together the first bracket 21A, the body 30, and the second bracket 21B. The body 30 has a base portion 31 through which the coupling pin 22 penetrates. The base portion 31 rotates about a rotational axis P that extends orthogonal to the axial direction of the axle of the bogie and extends along a direction in which the left and right caliper levers 40 and 50 extend (see Fig. 4).

The brake caliper 20 is rotatably attached to the bogie, so that the disc 11 and brake pads 12 remain parallel to each other even if the bogie becomes inclined while the railway vehicle travels. With such arrangement, the brake caliper 20 may be undesirably rotated by the vibration generated during the traveling of the railway vehicle. As a result, the brake pads 12 may touch the disc 11 even though no brake force is generated or no braking is applied.

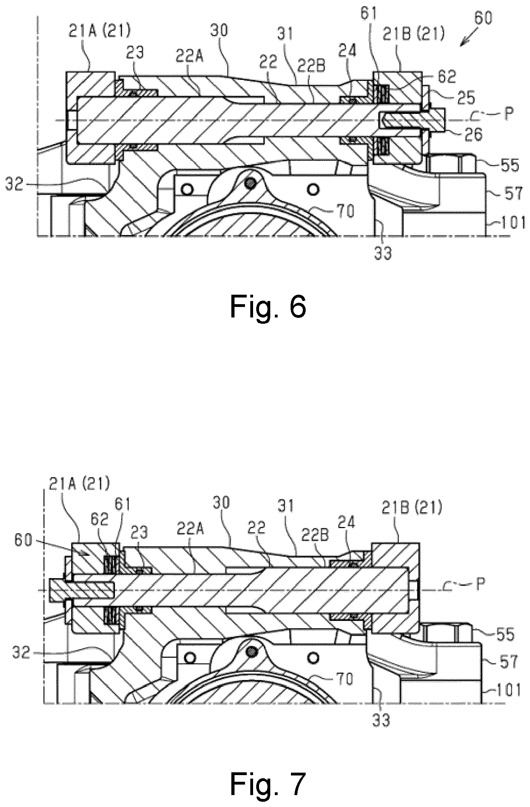

To address this issue, as shown in Figs. 5 and 6, the brake caliper 20 includes a friction applying unit 60 for increasing the frictional force resulting from the relative movement between the bracket 21 and the body 30 as the body 30 rotates. The friction applying unit 60 is provided in the second bracket 21B. The friction applying unit 60 is penetrated by the coupling pin 22 and configured to, as the body 30 and the second bracket 21B rotate relative to each other, generate sliding friction at the contact surface of the body 30, in the axial direction, surrounding the coupling pin 22. The friction applying unit 60 serves as a rotation restraining unit for restraining the rotation of the coupling pin 22. The friction applying unit 60 includes a friction ring 61, which is a pressing member, for generating a frictional force when pressed against the body 30. The friction ring 61 is penetrated by the coupling pin 22. The friction applying unit 60 includes a spring 62, which is an energizing member, for generating a frictional force by energizing the friction ring 61. The spring 62 includes three disc springs. Alternatively, the spring 62 may include one, two or four or more disc springs, and the number of disc springs may be determined by a required energizing force. The spring 62 is penetrated by the coupling pin 22.

The bracket 21 retain the coupling pin 22 at the respective ends thereof. In other words, the first bracket 21A retains a first end portion 22A of the coupling pin 22, and the second bracket 21B retains a second end portion 22B of the coupling pin 22. The first end portion 22A of the coupling pin 22 has a greater diameter than the second end portion 22B opposite the first end portion 22A. Accordingly, the coupling pin 22 is inserted into the body 30 from the side facing the first bracket 21A. The first end portion 22A of the coupling pin 22 is press-fit into the first bracket 21A. The coupling pin 22 is inserted into the second bracket 21B and fixedly secured by a bolt 26. A ring 25 is sandwiched between the coupling pin 22 and the head of the bolt 26. A first bushing 23 is attached to a portion of the body 30 that touches the first bracket 21A. The first bushing 23 is divided into a planar portion shaped like a disc and a tubular portion shaped like a cylinder. The planar portion of the first bushing 23 touches the first bracket 21A. The first bushing 23 is made of a softer material than the first bracket 21A. A second busing 24 is attached to a portion of the body 30 that touches the second bracket 21B and the friction ring 61. The second bushing 24 is divided into a planar portion shaped like a disc and a tubular portion shaped like a cylinder. The planar portion of the second bushing 24 touches the second bracket 21B and the friction ring 61. The second bushing 24 is made of a softer material than the second bracket 21B and the friction ring 61. The second bushing 24 corresponds to a contact member.

As the spring 62 of the friction applying unit 60 energizes the body 30, the second bracket 21B is energized in such a direction that the second bracket 21B separates away from the base portion 31 of the body 30. As a result, the coupling pin 22 as well as the second bracket 21B is pulled, so that the first bracket 21A fixedly attached to the first end portion 22A of the coupling pin 22 is pressed against the base portion 31 of the body 30. The friction applying unit 60 thus generates a frictional force at the contact surface between the body 30 and the second bracket 21B and also generates a frictional force at the contact surface between the first bracket 21A and the body 30. If the body 30 attempts to rotate relative to the bracket 21, sliding friction is generated between the friction ring 61 and the second bushing 24, thereby restraining the rotation.

As shown in Fig. 5, the body 30 includes a first support portion 32 that extends from below the base portion 31 toward the left and right caliper levers 40 and 50 to support the left and right caliper levers 40 and 50. The body 30 also includes a second support portion 33 that extends from the center of the first support portion 32 toward the rear side in the longitudinal direction of the left and right caliper levers 40 and 50 to support the cylinder device 15. The second support portion 33 is a plate-shaped member. The base portion 31, the first support portion 32, and the second support portion 33 of the body 30 are formed as a single unit body. When the bogie is tilted in the axial direction of the axle, the body 30 turns about the rotational axis P. This enables the brake pads 12 to always remain parallel to the disc 11.

A left support portion 32A supporting the left caliper lever 40 is provided on the left portion of the first support portion 32. A left rotation pin 35 penetrates the left support portion 32A to rotatably support the left caliper lever 40. The left rotation pin 35 is rotatable relative to the left support portion 32A. An operation lever 35A is fixedly attached to the left rotation pin 35 and is operated by a driving force from the cylinder device 15. A right support portion 32B supporting the right caliper lever 50 is provided on the right portion of the first support portion 32. Right rotation pins 36 penetrate through upper and lower portions of the right support portion 32B respectively to rotatably support the right caliper lever 50. The right rotation pins 36 are rotatable relative to the right support portion 32B.

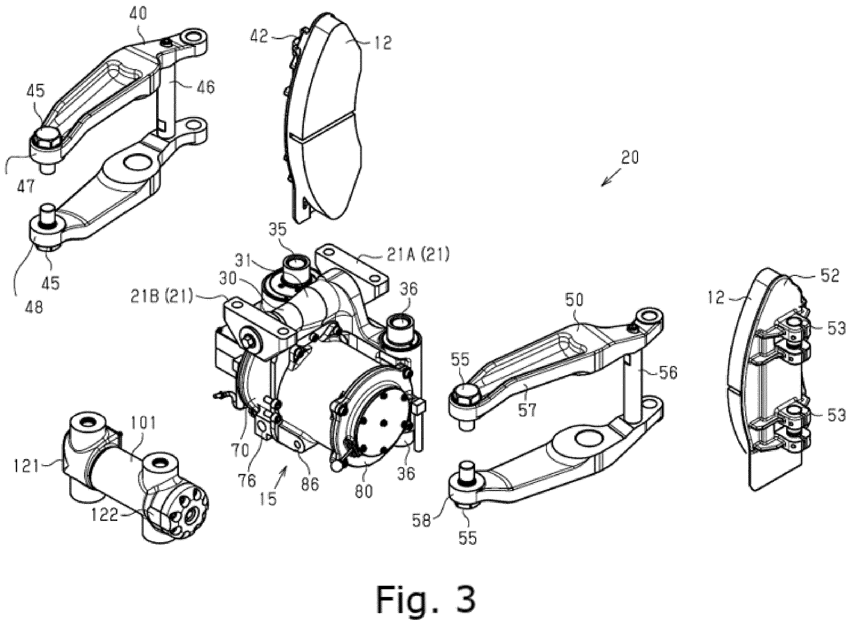

As shown in Fig. 3, the left caliper lever 40 includes a pair of left upper lever 47 and a left lower lever 48. The left upper and lower levers 47 and 48 are spaced away from each other and face each other in the axial direction of the left rotation pin 35. At the tip end portion of the left caliper lever 40, a pad attachment member 42 is connected via two pad rotation pins 43. To the pad attachment member 42, the brake pad 12 is attached. The pad rotation pins 43 are rotatable relative to the left upper and lower levers 47 and 48. The pad rotation pins 43 are fixedly attached to the pad attachment member 42. The left upper and lower levers 47 and 48 are coupled together via a left lever coupling pin 46.

The right caliper lever 50 includes a pair of a right upper lever 57 and a right lower lever 58. The right upper and lower levers 57 and 58 are spaced away from each other and face each other in the axial direction of the right rotation pin 36. At the tip end portion of the right caliper lever 50, a pad attachment member 52 is connected via two pad rotation pins 53. To the pad attachment member 52, the brake pad 12 is attached. The pad rotation pins 53 are rotatable relative to the right upper and lower levers 57 and 58. The pad rotation pins 53 are fixedly attached to the pad attachment member 52. The right upper and lower levers 57 and 58 are coupled together via a right lever coupling pin 56.

As shown in Fig. 2, the cylinder device 15 is mounted to the second support portion 33 of the body 30. The cylinder device 15 includes a service brake cylinder 70 and a parking brake cylinder 80. The service brake cylinder 70 and the parking brake cylinder 80 are mounted to surfaces of the second support portion 33 that are perpendicular to the axle. The service brake cylinder 70 is mounted to the left-side surface of the second support portion 33 of the body 30. The parking brake cylinder 80 is mounted to the right-side surface of the second support portion 33 of the body 30. This means that the service and parking brake cylinders 70 and 80 sandwich the second support portion 33 of the body 30. The surfaces of the second support portion 33 to which the service and parking brake cylinders 70 and 80 are mounted are parallel to the direction in which the left and right caliper levers 40 and 50 extend and are parallel to the surface of the brake pads 12.

As shown in Fig. 3, the service and parking brake cylinders 70 and 80 are each fixed to the second support portion 33 with four bolts. The service and parking brake cylinders 70 and 80 are bolted to the second support portion 33 at different positions. Therefore, the service and parking brake cylinders 70 and 80 can be mounted to and removed from the second support portion 33 independently from each other.

As shown in Fig. 2, the second support portion 33 of the body 30 has an opening 33A formed in the middle thereof. The opening 33A is elongated in the longitudinal direction of the left and right caliper levers 40 and 50. With such a design, in mounting and removing the service and parking brake cylinders 70 and 80, they can be moved in the opening 33A in the longitudinal direction of the left and right caliper levers 40 and 50.

The service brake cylinder 70 can be removed from the left-side surface of the second support portion 33 of the body 30 by taking off bolts. The parking brake cylinder 80 can be removed from the right-side surface of the second support portion 33 of the body 30 by taking off the bolts. The gap adjustment device 100 can be removed from the left and right caliper levers 40 and 50 by taking off bolts 45 and 55. With such a design, the cylinder device 15 and the gap adjustment device 100 can be readily removed and mounted for inspection and replacement. Any number of bolts may be used to fix the cylinder device 15.

The service brake cylinder 70 includes a first cylinder chamber 71, a first piston 72, a first rod 73, and a first spring 74. The first piston 72 moves within the first cylinder chamber 71. The first rod 73 is fixed to the first piston 72 and projects from the first cylinder chamber 71. The first spring 74 energizes the first piston 72 in such a direction that the first rod 73 is housed in the first cylinder chamber 71. A first space 75 is defined in the first cylinder chamber 71 as the space not including the first spring 74. The service brake cylinder 70 includes a first feeding port 76 for feeding compressed air into the first space 75 within the first cylinder chamber 71 (see Fig. 3). The first feeding port 76 is provided outside the first cylinder chamber 71. When the compressed air is fed into the first space 75 within the first cylinder chamber 71 of the service brake cylinder 70, the first piston 72 is pushed such that the first rod 73 projects. When the compressed air is discharged from the first space 75 within the first cylinder chamber 71 of the service brake cylinder 70, the first spring 74 pushes the first piston 72 so that the first rod 73 is accommodated in the first cylinder chamber 71. The first rod 73 corresponds to an output rod of the service brake cylinder 70. The first cylinder chamber 71 corresponds to a casing of the service brake cylinder 70.

The parking brake cylinder 80 includes a second cylinder chamber 81, a second piston 82, a second rod 83, and a second spring 84. The second piston 82 moves within the second cylinder chamber 81. The second rod 83 is fixed to the second piston 82 and projects from the second cylinder chamber 81 and extends into the first cylinder chamber 71. The second spring 84 energizes the second piston 82 in such a direction that the second rod 83 projects from the second cylinder chamber 81. A second space 85 is defined in the second cylinder chamber 81 as the space not including the second spring 84. The parking brake cylinder 80 includes a second feeding port 86 (see Fig. 3) for feeding compressed air into the second space 85 within the second cylinder chamber 81. The second feeding port 86 is provided outside the second cylinder chamber 81. When the compressed air is fed into the second space 85 within the second cylinder chamber 81 of the parking brake cylinder 80, the second piston 82 is pushed such that the second rod 83 is accommodated into the second cylinder chamber 81. When the compressed air is discharged from the second space 85 in the second cylinder chamber 81 of the parking brake cylinder 80, the second spring 84 pushes the second piston 82, so that the second rod 83 projects from the second cylinder chamber 81 and enters the first cylinder chamber 71. As a result, the second rod 83 pushes the first piston 72, so that the first rod 73 projects outside. The second rod 83 corresponds to an output shaft of the parking brake cylinder 80. The second cylinder chamber 81 corresponds to a casing of the parking brake cylinder 80.

The first cylinder chamber 71 includes a first projecting portion 71A that projects into the opening 33A. The second cylinder chamber 81 includes a second projecting portion 81A that projects into the opening 33A. The second projecting portion 81A is penetrated by the second rod 83. The first projecting portion 71A is fitted around the second projecting portion 81A. With such arrangement, the first rod 73 of the service brake cylinder 70 and the second rod 83 of the parking brake cylinder 80 are positioned coaxially, and the output of the parking brake cylinder 80 is transmitted to the service brake cylinder 70.

A rotatable roller 35B is attached to the tip end of the operation lever 35A. The first rod 73 of the cylinder device 15 has a receiving portion 73A provided in the tip end thereof. The receiving portion 73A is a through-hole for receiving therein the roller 35B while touching the roller 35B. The receiving portion 73A is configured to transmit the driving force from the first rod 73 to the operation lever 35A, while absorbing the lag between the linear movement of the first rod 73 and the rotational movement of the operation lever 35A.

As shown in Figs. 1 and 2, the brake caliper 20 includes the gap adjustment device 100 for adjusting the gaps between the brake pads 12 and the disc 11. The gap adjustment device 100 includes a gap adjuster 101 for adjusting the gaps and a gap outputting unit 90 for outputting a gap to the gap adjuster 101. The gap outputting unit 90 includes a pulling unit 91 and a wire 96. The pulling unit 91 is configured to pull the wire 96 to an extent determined by the amount of the movement of the first rod 73 of the cylinder device 15. The gap adjuster 101 connects between the base end portion of the left caliper lever 40 and the base end portion of the right caliper lever 50. The left caliper lever 40 and the gap adjuster 101 are rotatably coupled with each other with a pair of upper and lower bolts 45. The right caliper lever 50 and the gap adjuster 101 are rotatably coupled with each other with a pair of upper and lower bolts 55. The left caliper lever 40 and the gap adjuster 101 rotate about a rotational axis 44, and the right caliper lever 50 and the gap adjuster 101 rotate about a rotational axis 54.

The gap adjustment device 100 adjusts the distance between the base end portion of the left caliper lever 40 and the base end portion of the right caliper lever 50 to adjust the gaps between the brake pads 12 and the disc 11. As the brake pads 12 wear off, the gap grows between the brake pads 12 and the disc 11. To deal with this issue, the gap adjustment device 100 increases the distance between the base end portion of the left caliper lever 40 and the base end portion of the right caliper lever 50, thereby reducing the distance between the brake pads 12 and the disc 11.

In the gap adjustment device 100, the pulling unit 91 pulls the wire 96 if the first rod 73 moves by a predetermined amount or more. In other words, if the first rod 73 protrudes and the amount of the protrusion reaches a predetermined value, the first rod 73 touches the pulling unit 91, as a result of which the pulling unit 91 rotates and accordingly pulls the wire 96.

As shown in Fig. 1, the gap adjuster 101 includes a first casing 121 and a second casing 122. The first casing 121 connects between the respective base end portions of the left upper and lower levers 47 and 48. The first casing 121 is rotatably coupled with the left upper and lower levers 47 and 48 via the bolts 45. The second casing 122 connects between the respective base end portions of the right upper and lower levers 57 and 58. The second casing 122 is rotatably coupled with the right upper and lower levers 57 and 58 via the bolts 55.

As shown in Fig. 2, the first casing 121 includes an extension portion 121A having a cylindrical shape and extending toward the second casing 122. A polygonal rod 123 shaped like a polygonal column is fixed to the first casing 121. The polygonal rod 123 extends in the direction in which the extension portion 121A of the first casing 121 extends.

The tip end portion of the polygonal rod 123 protrudes out of the first casing 121. The tip end portion of the polygonal rod 123 includes a hexagonal portion 123B shaped like a hexagonal column. The hexagonal portion 123B of the polygonal rod 123 can be manually rotated to adjust the gaps between the brake pads 12 and the disc 11.

A cylindrical screw shaft 124 is fixed to the second casing 122 and extends toward the first casing 121. The screw shaft 124 has a cylindrical space 124A formed therein. The space 124A is open at the first casing 121 side only. The space 124A in the screw shaft 124 receives the polygonal rod 123. The screw shaft 124 has external threads 124B on the outer surface thereof excluding the portion fixed to the second casing 122. The screw shaft 124 is supported by a support spring 122A. The tip end portion of the screw shaft 124 has a hexagonal portion 124C shaped like a hexagonal column. The hexagonal portion 124C of the screw shaft 124 can be manually rotated to adjust the gaps between the brake pads 12 and the disc 11. With the above arrangement, the gap adjustment is accessible from both sides of the gap adjuster 101. The gaps thus can be adjusted by a large amount at one time, resulting in increased efficiency and ease of the adjustment during maintenance work.

An adjustment nut 125 shaped like a cylinder is provided on the outer periphery of the screw shaft 124. The inner wall of the adjustment nut 125 partially has internal threads 125A that are configured to engage with the external threads 124B of the screw shaft 124. The adjustment nut 125 rotates relative to the screw shaft 124 while engaging with the external threads 124B of the screw shaft 124. Specifically, as the screw shaft 124 moves away from the polygonal rod 123, the adjustment nut 125 is rotated by the external threads 124B of the screw shaft 124 and the internal threads 125A of the adjustment nut 125.

The adjustment nut 125 is positioned between the extension portion 121A of the first casing 121 and the screw shaft 124. The outer periphery of the adjustment nut 125 has a ridge 125B provided thereon. The ridge 125B projects toward the inner wall of the extension portion 121A of the first casing 121. Between the adjustment nut 125 and the extension portion 121A of the first casing 121, an anti-vibration spring 126 is provided and energizes the ridge 125B toward the first casing 121 in the axial direction of the adjustment nut 125. The anti-vibration spring 126 is formed of a coil spring and is provided on the outer periphery of the adjustment nut 125. Since the ridge 125B of the adjustment nut 125 is energized by the anti-vibration spring 126, this can reduce the effect of vibration. A contact clutch 127 is provided between the adjustment nut 125 and the extension portion 121A of the first casing 121. When the ridge 125B is pushed toward the left caliper lever 40 in the axial direction, the contact clutch 127 contacts the surface of the ridge 125B that is perpendicular to the axial direction to control rotation of the adjustment nut 125. A cylindrical cover 128 covering the first casing 121 is fixedly attached to the second casing 122.

A wire attachment portion 130 is attached to a portion of the screw shaft 124 near the first casing 121. To the wire attachment portion 130, the wire 96 is connected. A one-way clutch 131 is provided between the adjustment nut 125 and the extension portion 121A of the first casing 121. The wire attachment portion 130 is fixedly attached to the one-way clutch 131. The one-way clutch 131 and the wire attachment portion 130 can integrally rotate. The one-way clutch 131 permits the adjustment nut 125 to rotate such that the gap adjuster 101 is elongated but prevents the adjustment nut 125 from rotating such that the gap adjuster 101 is shortened. A spring 132 is attached to the one-way clutch 131. If the wire 96 is pulled by the pulling unit 91, the one-way clutch 131 and the wire attachment portion 130 rotate clockwise as seen from the left side, so that the spring 132 is compressed. If the wire 96 is released from being pulled, the energizing force from the spring 132 rotates the one-way clutch 131 and the wire attachment portion 130, as well as the adjustment nut 125, in a reversed direction (anti-clockwise), elongating the gap adjuster 101.

Next, the operation of the brake caliper 20 will now be described. With additional reference to Fig. 2, a description is given of the operation of the brake caliper 20 and the gap adjustment device 100 performed before the brake pads 12 are worn.

While the railway vehicle travels, the traveling causing the railway vehicle to vibrate and the vibration causes the wheels and bogies to move relative to each other in the width direction (the thickness direction of the disc 11), the vertical direction and the front-rear direction of the railway vehicle. If the wheels and bogies move relative to each other, the body 30 supported on the bracket 21, which is attached to the bogie, is prevented by the friction applying unit 60 from rotating around the coupling pin 22 relative to the bracket 21. The friction applying unit 60 generates a frictional force at the contact surface between the body 30 and the second bracket 21B, and also generates a frictional force at the contact surface between the first bracket 21A and the body 30. Accordingly, the body 30 hardly rotates relative to the bracket 21 even if the railway vehicle vibrates while traveling. Here, if the brake pads 12 are pushed by the disc 11 and the body 30 resultantly receives a force from the disc 11 via the left or right caliper lever 40 or 50, the body 30 rotates around the coupling pin 22. In other words, the friction applying unit 60 is configured such that it can prevent the body 30 from rotating around the coupling pin 22 when the vibration is generated, while allowing the body 30 to rotate around the coupling pin 22 when the disc 11 touches the brake pads 12.

As shown in Fig. 2, the brake caliper 20 is configured such that compressed air is fed into the first space 75 in the service brake cylinder 70 of the cylinder device 15 to actuate the service brake. The first rod 73 of the service brake cylinder 70 moves in such a direction that it projects from the first cylinder chamber 71 along with the first piston 72, thereby driving the operation lever 35A clockwise via the roller 35B. Here, if the brake pads 12 have not worn off very much and the amount of movement (protrusion) of the first rod 73 is thus less than a predetermined value, the first rod 73 does not touch the pulling unit 91.

As the first rod 73 moves in such a direction that it projects from the first cylinder chamber 71, the operation lever 35A rotates clockwise along with the left rotation pin 35. The clockwise rotation of the left rotation pin 35 causes the left caliper lever 40 to rotate about the rotational axis 44 in such a direction that the left brake pad 12 contacts the disc 11, as a result of which the left brake pad 12 contacts the disc 11.

After the left brake pad 12 contacts the disc 11, the left caliper lever 40 rotates clockwise about the pad rotation pin 43. When the left caliper lever 40 rotates about the pad rotation pin 43, the right caliper lever 50 rotates counterclockwise about the right rotation pin 36 via the rotational axis 44, the gap adjuster 101 and the rotational axis 54, as a result of which the right brake pad 12 contacts the disc 11.

When the compressed air is discharged from the second space 85 within the parking brake cylinder 80 and the second rod 83 projects from the second cylinder chamber 81, the second rod 83 pushes the first piston 72 and the first rod 73, resulting in the same operation as when the first rod 73 projects from the first cylinder chamber 71.

The following now describes how the brake caliper 20 and the gap adjustment device 100 operate with the brake pads 12 having worn out. When the brake pads 12 are worn out, the service brake cylinder 70 operates in the same manner with compressed air fed thereto. The amount of movement of the first rod 73 increases as the amount of wear of the brake pads 12 increases. If the amount of wear of the brake pads 12 increases to such an extent that the amount of movement of the first rod 73 becomes equal to or greater than a predetermined value, the gap adjustment device 100 comes into operation. Specifically, the gap adjuster 101 is elongated to shorten the gaps between the brake pads 12 and the disc 11.

If the first rod 73 has moved by a predetermined amount or more, the tip end portion of the first rod 73 touches the pulling unit 91 and the pulling unit 91 rotates, as a result of which the wire 96 is pulled. If the wire 96 is pulled, the wire attachment portion 130 rotates clockwise together with the one-way clutch 131. Here, if the first rod 73 has moved by a predetermined amount or more, this means that the gaps between the brake pads 12 and the disc 11 are equal to or greater than a prescribed value.

Subsequently, in the brake caliper 20, when the left brake pad 12 and the right brake pad 12 sandwich the disc 11 to generate a compressive force in the gap adjuster 101, the screw shaft 124 tends to rotate the adjustment nut 125 in the direction for shortening. Here, the rotation of the adjustment nut 125 is controlled by the frictional force between the contact clutch 127 and the ridge 125B of the adjustment nut 125 and by the one-way clutch 131. Therefore, the screw shaft 124 does not move in the direction for shortening, and the sandwiching force of the brake caliper 20 is maintained, thus generating a braking force.

Subsequently, in the brake caliper 20, when feeding of the compressed air to the service brake cylinder 70 is stopped to release the brake, the first rod 73 returns to the first cylinder chamber 71. This means that the first rod 73 no longer touches the pulling unit 91 and that the pulling unit 91 no longer pulls the wire 96. If the wire 96 is released from being pulled, the energizing force from the spring 132 rotates the one-way clutch 131 and wire attachment portion 130, as well as the adjustment nut 125, in a reversed direction (anti-clockwise). Here, the one-way clutch 131 does not rotate in the direction for elongation. The one-way clutch 131 thus rotates anti-clockwise together with the adjustment nut 125. This enlarges the entire length of the gap adjuster 101, resulting in a larger distance between the base end portion of the left caliper lever 40 and the base end portion of the right caliper lever 50 and smaller gaps between the brake pads 12 and the disc 11.

Advantageous effects of the first embodiment will be now described.
(1) A frictional force is generated against the relative rotation between the body 30 and the bracket 21, thereby making it difficult for the body 30 to rotate relative to the bracket 21. This can prevent unintended contact between the brake pads 12 and the disc 11 when the brake is not in operation. In addition, sliding friction is generated around the coupling pin 22 at the contact surface of the coupling pin 22 in the axial direction and prevents rotation. Accordingly, the friction can be applied in a more stabilized manner than in a case where the friction is applied only at part of the body 30 or bracket 21 around the coupling pin 22.
(2) As enclosed in the bracket 21, the friction applying unit 60 can be provided without affecting the constitution of the body 30. The bracket 21 can be configured in any manner as long as it can be fixedly attached to the bogie. Accordingly, an additional constituent part for allowing the frictional applying unit 60 to be arranged can be more easily provided in the bracket 21 than in the body 30.
(3) Since the spring 62 energizes the friction ring 61, a force can be reliably produced against the relative rotation between the body 30 and the bracket 21.
(4) If the second bushing 24 is worn out, a desired frictional force can be restored by replacing the second bushing 24 with a new one. This facilitates the maintenance work when compared with the case where the body 30, bracket 21 and coupling pin 22 are replaced with their counterparts.
(5) The second end portion 22B of the coupling pin 22 has a smaller diameter than the first end portion 22A. With such a design, the weight of the coupling pin 22 can be reduced. As the spring 62 fittingly surrounds the outer periphery of the second end portion 22B, the spring 62 is allowed to have a smaller diameter than in a case where the spring 62 is provided around the first end portion 22A. The friction applying unit 60 can achieve a reduced size.

### <Second Embodiment>

With reference to Fig. 7, a second embodiment of the brake caliper will now be described. The second embodiment is different from the first embodiment in that the friction applying unit 60 of the brake caliper is arranged near the first end portion 22A of the coupling pin 22. The following description will be focused on the differences from the first embodiment.

As shown in Fig. 7, the friction applying unit 60 is enclosed within the first bracket 21A. The friction applying unit 60 is penetrated by the coupling pin 22 and configured to, as the body 30 and the first bracket 21A rotate relative to each other, generate sliding friction at the contact surface of the body 30 in the axial direction, surrounding the coupling pin 22. The friction applying unit 60 serves as a rotation restraining unit for restraining the rotation of the coupling pin 22. The friction applying unit 60 includes the friction ring 61, which is a pressing member, for generating a frictional force when pressed against the body 30. The friction ring 61 is penetrated by the coupling pin 22. The friction applying unit 60 includes the spring 62, which is an energizing member, for generating a frictional force by energizing the friction ring 61. The spring 62 includes three disc springs. Alternatively, the spring 62 may include one, two or four or more disc springs, and the number of disc springs may be determined by a required energizing force. The spring 62 is penetrated by the coupling pin 22.

The first end portion 22A of the coupling pin 22 has a smaller diameter than the second end portion 22B opposite the first end portion 22A. Accordingly, the coupling pin 22 is inserted into the body 30 from the side facing the second bracket 21B. The coupling pin 22 is then inserted into the first bracket 21A and fixedly secured by the bolt 26 with the first bracket 21A and the ring 25 being placed therebetween. The first bushing 23 is attached to the portion of the body 30 that touches the first bracket 21A. The second end portion 22B of the coupling pin 22 is press-fit into the second bracket 21B. The second busing 24 is attached to the portion of the body 30 that touches the second bracket 21B and the friction ring 61. The first bushing 23 corresponds to a contact member.

As the spring 62 of the friction applying unit 60 energizes the body 30, the first bracket 21A is energized in such a direction that the first bracket 21A separates away from the base portion 31 of the body 30. As a result, the coupling pin 22, as well as the first bracket 21A, is pulled toward the first bracket 21A, so that the second bracket 21B fixedly attached to the second end portion 22B of the coupling pin 22 is pressed against the base portion 31 of the body 30. The friction applying unit 60 thus generates a frictional force at the contact surface between the body 30 and the first bracket 21A and also at the contact surface between the second bracket 21B and the body 30. If the body 30 attempts to rotate relative to the bracket 21, sliding friction is generated between the friction ring 61 and the first bushing 23, thereby restraining the rotation.

Advantageous effects of the second embodiment will be now described. The following advantageous effects are obtained in addition to the advantageous effects (1) to (3) of the first embodiment.

(6) If the first bushing 23 is worn out, a desired frictional force can be restored by replacing the first bushing 23 with a new one. This facilitates the maintenance work when compared with the case where the body 30, bracket 21 and coupling pin 22 are replaced with their counterparts.

(7) Since the first end portion 22A of the coupling pin 22 has a smaller diameter than the second end portion 22B, the weight can be reduced. As the spring 62 fittingly surrounds the outer periphery of the first end portion 22A, the spring 62 is allowed to have a smaller diameter than in a case where the spring 62 is provided around the second end portion 22B. The friction applying unit 60 can achieve a reduced size.

### <Third Embodiment>

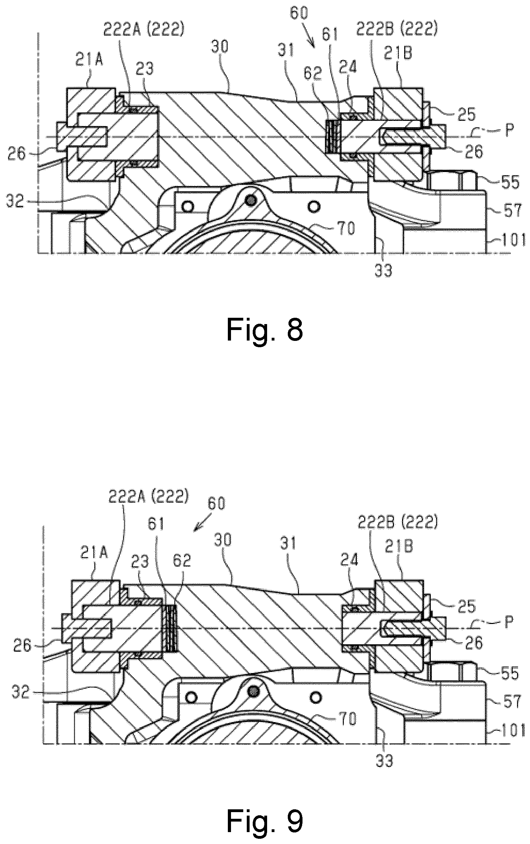

With reference to Fig. 8, a third embodiment of the brake caliper will now be described. The third embodiment is different from the first embodiment in that the friction applying unit 60 is arranged between the body 30 and the coupling pin. The following description will be focused on the differences from the first embodiment.

As shown in Fig. 8, a first coupling pin 222A is provided between the body 30 and the first bracket 21A. Between the body 30 and the second bracket 21B, a second coupling pin 222B is provided. The first and second coupling pins 222A and 222B constitute a coupling pin 222. The brake caliper 20 includes the friction applying unit 60 for generating sliding friction at the contact surface of the second coupling pin 222B in the axial direction against the relative rotation between the body 30 and the second coupling pin 222B. The friction applying unit 60 is provided in the body 30. The friction applying unit 60 generates sliding friction at the contact surface of the second coupling pin 222B that defines the second coupling pine 222B in the axial direction and that is on the axis. The friction applying unit 60 serves as a rotation restraining unit for restraining the rotation of the second coupling pin 222B. The friction applying unit 60 includes the friction ring 61, which is a pressing member, for generating a frictional force when pressed against the second coupling pin 222B. The friction applying unit 60 includes the spring 62, which is an energizing member, for generating a frictional force by energizing the friction ring 61. The spring 62 includes three disc springs. Alternatively, the spring 62 may include one, two or four or more disc springs, and the number of disc springs may be determined by a required energizing force.

The first coupling pin 222A is inserted into the first bracket 21A and fixedly secured by the first bracket 21A and a bolt 26. The second coupling pin 222B is inserted into the second bracket 21B and fixedly secured by a bolt 26 with the second bracket 21B and the ring 25 being placed therebetween. The first bushing 23 is attached to the portion of the body 30 that touches the first bracket 21A. The second bushing 24 is attached to the portion of the body 30 that touches the second bracket 21B.

Since the spring 62 of the friction applying unit 60 energizes the friction ring 61, the friction ring 61 is pressed against the second coupling pin 222B. This can generate sliding friction between the friction ring 61 and the second coupling pin 222B. If the body 30 attempts to rotate relative to the second bracket 21B, the sliding friction is generated between the friction ring 61 and the second coupling pin 222B, thereby restraining the rotation.

Advantageous effects of the third embodiment will be now described. The following advantageous effects are obtained in addition to the advantageous effect (3) of the first embodiment.

(8) A frictional force is generated against the relative rotation between the body 30 and the second bracket 21B, thereby making it difficult for the body 30 to rotate relative to the second bracket 21B. This can prevent unintended contact between the brake pads 12 and the disc 11 when the brake is not in operation. In addition, since sliding friction is generated at the contact surface of the coupling pin 222 in the axial direction and prevents the rotation, friction can be applied in a more stabilized manner than in a case where friction is applied only at part of the contact surface of the coupling pin 222 in the axial direction.

### <Fourth Embodiment>

With reference to Fig. 9, a fourth embodiment of the brake caliper will now be described. The fourth embodiment is different from the third embodiment in that the friction applying unit 60 is arranged between the body 30 and a first coupling pin 222A. The following description will be focused on the differences from the third embodiment.

As shown in Fig. 9, the brake caliper 20 includes the friction applying unit 60 for generating sliding friction at the contact surface of the first coupling pin 222A in the axial direction against the relative rotation between the body 30 and the first coupling pin 222A. The friction applying unit 60 is enclosed within the body 30. The friction applying unit 60 generates sliding friction at the contact surface of the first coupling pin 222A that defines the first coupling pin 222A in the axial direction and that is on the axis. The friction applying unit 60 serves as a rotation restraining unit for restraining the rotation of the first coupling pin 222A. The friction applying unit 60 includes the friction ring 61, which is a pressing member, for generating a frictional force when pressed against the first coupling pin 222A. The friction applying unit 60 includes the spring 62, which is an energizing member, for generating a frictional force by energizing the friction ring 61. The spring 62 includes three disc springs. Alternatively, the spring 62 may include one, two or four or more disc springs, and the number of disc springs may be determined by a required energizing force.

Since the spring 62 of the friction applying unit 60 energizes the friction ring 61, the friction ring 61 is pressed against the first coupling pin 222A. This can generate sliding friction between the friction ring 61 and the first coupling pin 222A. If the body 30 attempts to rotate relative to the first bracket 21A, sliding friction is generated between the friction ring 61 and the first coupling pin 222A, thereby restraining the rotation.

Advantageous effects of the fourth embodiment will be now described. The following advantageous effects are obtained in addition to the advantageous effect (3) of the first embodiment.

(9) A frictional force is generated against the relative rotation between the body 30 and the first bracket 21A, thereby making it difficult for the body 30 to rotate relative to the first bracket 21A. This can prevent unintended contact between the brake pads 12 and the disc 11 when the brake is not in operation. In addition, since sliding friction is generated at the contact surface of the first coupling pin 222A in the axial direction and prevents the rotation, friction can be applied in a more stabilized manner than in a case where friction is applied only at part of the contact surface of the coupling pin 222 in the axial direction.

### <Fifth Embodiment>

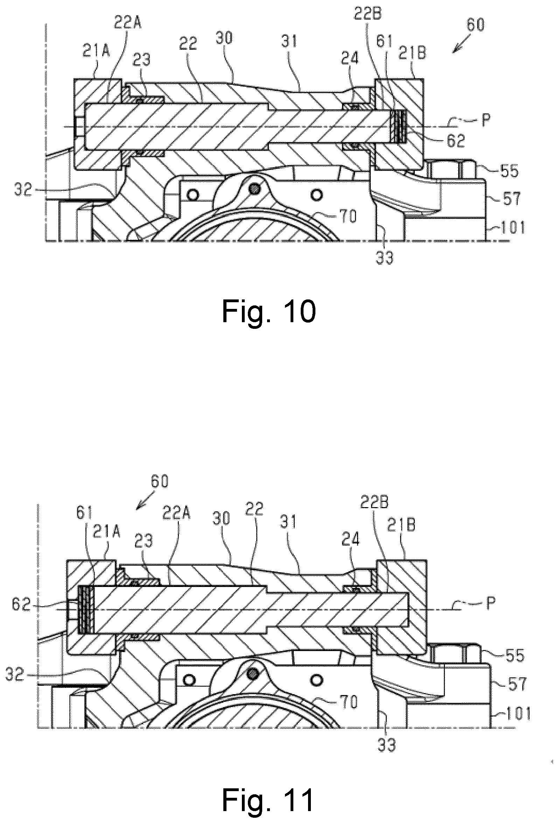

With reference to Fig. 10, a fifth embodiment of the brake caliper will now be described. The fifth embodiment is different from the first embodiment in that the friction applying unit 60 is arranged between the coupling pin 22 and the second bracket 21B. The following description will be focused on the differences from the first embodiment.

As shown in Fig. 10, the brake caliper 20 includes the friction applying unit 60 for generating sliding friction at the contact surface of the coupling pin 22 in the axial direction against the relative rotation between the coupling pin 22 and the second bracket 21B. The friction applying unit 60 is enclosed within the second bracket 21B. The friction applying unit 60 generates sliding friction at the contact surface of the coupling pin 22 that defines the coupling pin 22 in the axial direction and that is on the axis. The friction applying unit 60 serves as a rotation restraining unit for restraining the rotation of the coupling pin 22. The friction applying unit 60 includes the friction ring 61, which is a pressing member, for generating a frictional force when pressed against the coupling pin 22. The friction applying unit 60 includes a spring 62, which is an energizing member, for generating a frictional force by energizing the friction ring 61. The spring 62 includes three disc springs. Alternatively, the spring 62 may include one, two or four or more disc springs, and the number of disc springs may be determined by a required energizing force.

The first end portion 22A of the coupling pin 22 has a greater diameter than the second end portion 22B opposite the first end portion 22A. Accordingly, the coupling pin 22 is inserted into the body 30 from the side facing the first bracket 21A. The first end portion 22A of the coupling pin 22 is press-fit into the first bracket 21A. The second end portion 22B of the coupling pin 22 is press-fit into the second bracket 21B. In other words, after the spring 62 and the friction ring 61 are inserted into the second bracket 21B, the second end portion 22B of the coupling pin 22 is press-fit into the second bracket 21B. In this way, the friction applying unit 60 is completed. The coupling pin 22 is fixedly attached to the body 30. Accordingly, as the body 30 rotates relative to the second bracket 21B, sliding friction is generated between the second end portion 22B of the coupling pin 22 and the second bracket 21B.

Advantageous effects of the fifth embodiment will be now described. The following advantageous effects are obtained in addition to the advantageous effects (2) and (3) of the first embodiment.

(10) A frictional force is generated against the relative rotation between the coupling pin 22 and the second bracket 21B, thereby making it difficult for the coupling pin 22 to rotate relative to the second bracket 21B. This can prevent unintended contact between the brake pads 12 and the disc 11 while the brake is not in operation. In addition, since sliding friction is generated at the contact surface of the coupling pin 22 in the axial direction and prevents the rotation, friction can be applied in a more stabilized manner than in a case where friction is applied only at part of the contact surface of the coupling pin 22 in the axial direction.

### <Sixth Embodiment>

With reference to Fig. 11, a sixth embodiment of the brake caliper will now be described. The sixth embodiment is different from the fifth embodiment in that the friction applying unit 60 is arranged between the coupling pin 22 and the first bracket 21B. The following description will be focused on the differences from the fifth embodiment.

As shown in Fig. 11, the brake caliper 20 includes the friction applying unit 60 for generating sliding friction at the contact surface of the coupling pin 22 in the axial direction against the relative rotation between the coupling pin 22 and the first bracket 21A. The friction applying unit 60 is enclosed within the first bracket 21A. The friction applying unit 60 generates sliding friction at the contact surface of the coupling pin 22 that defines the coupling pin 22 in the axial direction and that is on the axis. The friction applying unit 60 serves as a rotation restraining unit for restraining the rotation of the coupling pin 22. The friction applying unit 60 includes the friction ring 61, which is a pressing member, for generating a frictional force when pressed against the coupling pin 22. The friction applying unit 60 includes the spring 62, which is an energizing member, for generating a frictional force by energizing the friction ring 61. The spring 62 includes three disc springs. Alternatively, the spring 62 may include one, two or four or more disc springs, and the number of disc springs may be determined by a required energizing force.

The first end portion 22A of the coupling pin 22 has a greater diameter than the second end portion 22B opposite the first end portion 22A. Accordingly, the coupling pin 22 is inserted into the body 30 from the side facing the first bracket 21A. The first end portion 22A of the coupling pin 22 is press-fit into the first bracket 21A. The second end portion 22B of the coupling pin 22 is press-fit into the second bracket 21B. In other words, after the spring 62 and the friction ring 61 are inserted into the first bracket 21A, the first end portion 22A of the coupling pin 22 is press-fit into the first bracket 21A. In this way, the friction applying unit 60 is completed. The coupling pin 22 is fixedly attached to the body 30. Accordingly, as the body 30 rotates relative to the first bracket 21A, sliding friction is generated between the first end portion 22A of the coupling pin 22 and the first bracket 21A.

Advantageous effects of the sixth embodiment will be now described. The following advantageous effects are obtained in addition to the advantageous effects (2) and (3) of the first embodiment.

(11) A frictional force is generated against the relative rotation between the coupling pin 22 and the first bracket 21A, thereby making it difficult for the coupling pin 22 to rotate relative to the first bracket 21A. This can prevent unintended contact between the brake pads 12 and the disc 11 when the brake is not in operation. In addition, since sliding friction is generated at the contact surface of the coupling pin 22 in the axial direction and prevents the rotation, friction can be applied in a more stabilized manner than in a case where friction is applied only at part of the contact surface of the coupling pin 22 in the axial direction.

### <Other Embodiments>

The foregoing embodiments can be modified as described below. The above embodiments and the following modifications can be implemented in combination to the extent where they are technically consistent with each other.

In the first, second, fifth and sixth embodiments, the first and second end portions 22A and 22B of the coupling pin 22 have different diameters. The first and second end portions 22A and 22B of the coupling pin 22, however, may have the same diameter.

In the first to fourth embodiments, the bolts 26 are used to fixedly secure the coupling pin 22, 222 onto the bracket 21. The bolts 26, however, may not be used as long as the coupling pin 22, 222 can be fixedly secured onto the bracket 21.

In the foregoing embodiments, the first bushing 23 is provided. The embodiments of the present invention, however, may be practiced without the first bushing 23. In the foregoing embodiments, the second bushing 24 is provided. The embodiments of the present invention, however, may be practiced without the second bushing 24.

Although the energizing member or spring 62 is formed by the disc springs in the above-described embodiments, other structures or mechanisms may be used instead of the disc springs as long as they can push the pressing member or friction ring 61. For instance, the energizing member may be formed of a different type of springs such as a coil spring or an elastic member such as an O-ring. As a further alternative example, the energizing member may be constituted by a first permanent magnet and a second permanent magnet that is attached to the pressing member. Here, the first and second permanent magnets are arranged such that like poles of the first and second permanent magnets face each other. In this case, the pressing member is pushed by a repulsive force generated between the first permanent magnet and the second permanent magnet.

The foregoing embodiments may be practiced without the energizing member. The foregoing embodiments employ the cylinder device 15 as the actuator, but may use other devices such as motor devices as the actuator.

The foregoing embodiments describe a plurality of physically separate constituent parts. They may be combined into a single part, and any one of them may be divided into a plurality of physically separate constituent parts. Irrespective of whether or not the constituent parts are integrated, they are acceptable as long as they are configured to solve the problems.

### LIST OF REFERENCE NUMBERS

- 11: disc
- 12: brake pad
- 15: cylinder device
- 20: brake caliper
- 21: bracket
- 21A: first bracket
- 21B: second bracket
- 22: coupling pin
- 22A: first end portion
- 22B: second end portion
- 23: first bushing
- 24: second bushing
- 25: ring
- 26: bolt
- 30: body
- 31: base portion
- 32: first support portion
- 33: second support portion
- 33A: opening
- 35: left rotation pin
- 35A: operation lever
- 35B: roller
- 36: right rotation pin
- 40: left caliper lever
- 42: pad attachment member
- 43: pad rotation pin
- 44: rotational axis
- 45: bolt
- 46: left lever coupling pin
- 47: left upper lever
- 48: left lower lever
- 50: right caliper lever
- 52: pad attachment member
- 53: pad rotation pin
- 54: rotational axis
- 55: bolt
- 56: right lever coupling pin
- 57: right upper lever
- 58: right lower lever
- 60: friction applying unit
- 61: friction ring serving as pressing member
- 62: spring serving as energizing member
- 70: service brake cylinder
- 80: parking brake cylinder
- 90: gap output unit
- 91: pulling unit
- 96: wire
- 97: outer tube
- 100: gap adjustment device
- 101: gap adjuster
- 121: first case
- 122: second case
- 123: polygonal rod
- 123A: space
- 123B: hexagonal portion
- 124: screw shaft
- 124A: space
- 124B: external thread
- 124C: hexagonal portion
- 125: adjustment nut
- 125A: internal thread
- 126: anti-vibration spring
- 127: contact clutch
- 128: cover
- 130: wire attachment portion
- 131: one-way clutch
- 132: spring
- 222: coupling pin
- 222A: first coupling pin
- 222B: second coupling pin

## Claims

1. A brake caliper (20) comprising:
a pair of caliper levers (40, 50), each caliper lever (40, 50) retaining a brake pad (12);
an actuator (15) for outputting a force to rotate the caliper levers (40, 50) such that the caliper levers (40, 50) press a disc (11);
a body (30) retaining the caliper levers (40, 50) in a rotatable manner and retaining the actuator (15);
a bracket (21) fixedly attached to a bogie; and
a coupling pin (22) coupling the body (30) to the bracket (21) such that the body (30) and the bracket (21) are rotatable relative to each other around a rotational axis extending in a longitudinal direction of the caliper levers (40, 50);
**characterized in that** the brake caliper (20) comprises a friction applying unit (60) penetrated by the coupling pin (22), the friction applying unit (60) being configured to restrain rotation of the body (30) by generating sliding friction at a contact surface of the friction applying unit (60) where the friction applying unit (60) touches the body (30) or the bracket (21).

2. A brake caliper (20) comprising:
a pair of caliper levers (40, 50), each caliper lever (40, 50) retaining a brake pad (12);
an actuator (15) for outputting a force to rotate the caliper levers (40, 50) such that the caliper levers (40, 50) press a disc (11);
a body (30) retaining the caliper levers (40, 50) in a rotatable manner and retaining the actuator (15);
a bracket (21) fixedly attached to a bogie; and
a coupling pin (22, 222) supporting the body (30) such that the body (30) is rotatable relative to the bracket (21) around a rotational axis extending in a longitudinal direction of the caliper levers (40, 50);
wherein the brake caliper (20) comprises a friction applying unit (60) configured to restrain rotation of the coupling pin (22, 222) by generating sliding friction at a contact surface of the friction applying unit (60) where the friction applying unit (60) touches an end of the coupling pin (22, 222) in an axial direction, **characterized in that** the friction applying unit (60) is provided in the body (30) or the bracket (21).

3. The brake caliper (20) of claim 1, wherein the friction applying unit (60) is provided in the bracket (21).

4. The brake caliper (20) of claim 1 or 3, wherein the friction applying unit (60) includes a pressing member (61) for generating the sliding friction when pressed against the bracket (21) or the body (30) and an energizing member (62) for generating a frictional force by energizing the pressing member (61).

5. The brake caliper (20) of claim 4, wherein the pressing member (61) and the energizing member (62) are penetrated by the coupling pin (22).

6. The brake caliper (20) of claim 4 or 5, comprising
contact members (23, 24) touching the pressing member (61), the contact members (23, 24) being made of a softer material than the pressing member (61).

7. The brake caliper (20) of any one of claims 4 to 6,
wherein the bracket (21) retains the coupling pin 22 at respective ends thereof,
wherein a first end portion (22A) of the coupling pin (22) has a smaller diameter than a second end portion (22B) opposite the first end portion (22A), and
wherein the energizing member (62) fittingly surrounds an outer periphery of the first end portion (22A).

8. The brake caliper (20) of claim 2, wherein the friction applying unit (60) includes a pressing member (61) for generating the sliding friction when pressed against the end of the coupling pin (22, 222) and an energizing member (62) for generating a frictional force by energizing the pressing member (61).

## Patentansprüche

1. Bremssattel (20), der umfasst:
ein Paar Bremssattel-Hebel (40, 50), wobei jeder Bremssattel-Hebel (40, 50) einen Bremsbelag (12) hält;
ein Betätigungselement (15), mit dem eine Kraft ausgegeben wird, durch die die Bremssattel-Hebel (40, 50) so gedreht werden, dass die Bremssattel-Hebel (40, 50) auf eine Scheibe (11) drücken;
einen Körper (30), der die Bremssattel-Hebel (40, 50) drehbar hält und das Betätigungselement (15) hält;
einen Träger (21), der fest an einem Untergestell angebracht ist; sowie
einen Kopplungsbolzen (22), der den Körper (30) mit dem Träger (21) so koppelt, dass der Körper (30) und der Träger (21) relativ zueinander um eine Drehachse herum gedreht werden können, die sich in einer Längsrichtung der Bremssattel-Hebel (40, 50) erstreckt;
**dadurch gekennzeichnet, dass** der Bremssattel (20) eine Einheit (60) zum Ausüben von Reibung umfasst, durch die sich der Kopplungsbolzen (22) hindurch erstreckt, wobei die Einheit (60) zum Ausüben von Reibung so ausgeführt ist, dass sie Drehung des Körpers (30) einschränkt, indem sie Gleitreibung an einer Kontaktfläche der Einheit (60) zum Ausüben von Reibung ausübt, an der die Einheit (60) zum Ausüben von Reibung den Körper (30) oder den Träger (21) berührt.

2. Bremssattel (20), der umfasst:
ein Paar Bremssattel-Hebel (40, 50), wobei jeder Bremssattel-Hebel (40, 50) einen Bremsbelag (12) hält;
ein Betätigungselement (15), mit dem eine Kraft ausgegeben wird, durch die die Bremssattel-Hebel (40, 50) so gedreht werden, dass die Bremssattel-Hebel (40, 50) auf eine Scheibe (11) drücken;
einen Körper (30), der die Bremssattel-Hebel (40, 50) drehbar hält und das Betätigungselement (15) hält;
einen Träger (21), der fest an einem Untergestell angebracht ist; sowie
einen Kopplungsbolzen (22, 222), der den Körper (30) so trägt, dass der Körper (30) relativ zu dem Träger (21) um eine Drehachse herum gedreht werden kann, die sich in einer Längsrichtung der Bremssattel-Hebel (40, 50) erstreckt;
wobei der Bremssattel (20) eine Einheit (60) zum Ausüben von Reibung umfasst, die so ausgeführt ist, dass sie Drehung des Kopplungsbolzens (22, 222) einschränkt, indem sie Gleitreibung an einer Kontaktfläche der Einheit (60) zum Ausüben von Reibung ausübt, an der die Einheit (60) zum Ausüben von Reibung ein Ende des Kopplungsbolzens (22, 222) in einer axialen Richtung berührt, **dadurch gekennzeichnet, dass** die Einheit (60) zum Ausüben von Reibung in dem Körper (30) oder dem Träger (21) vorhanden ist.

3. Bremssattel (20) nach Anspruch 1, wobei die Einheit (60) zum Ausüben von Reibung in dem Träger (21) vorhanden ist.

4. Bremssattel (20) nach Anspruch 1 oder 3, wobei die Einheit (60) zum Ausüben von Reibung ein Presselement (61), mit dem die Gleitreibung erzeugt wird, wenn es an den Träger (21) oder den Körper (30) gepresst wird, sowie ein Spannelement (62) enthält, mit dem eine Reibungskraft durch Spannen des Presselementes (61) erzeugt wird.

5. Bremssattel (20) nach Anspruch 4, wobei sich der Kopplungsbolzen (22) durch das Presselement (61) und das Spannelement (62) hindurch erstreckt.

6. Bremssattel (20) nach Anspruch 4 oder 5, der umfasst:
Kontaktelemente (23, 24), die das Presselement (61) berühren, wobei die Kontaktelemente (23, 24) aus einem weicheren Material als dem des Presselementes (61) bestehen.

7. Bremssattel (20) nach einem der Ansprüche 4 bis 6,
wobei der Träger (21) den Kopplungsbolzen (22) an jeweiligen Enden desselben hält,
wobei ein erster Endabschnitt (22A) des Kopplungsbolzens (22) einen kleineren Durchmesser hat als ein dem ersten Endabschnitt (22A) gegenüberliegender zweiter Endabschnitt (22B), und
wobei das Spannelement (62) einen Außenumfang des ersten Endabschnitts (22A) passend umschließt.

8. Bremssattel (20) nach Anspruch 2, wobei die Einheit (60) zum Ausüben von Reibung ein Presselement (61), mit dem die Gleitreibung erzeugt wird, wenn es an das Ende des Kopplungsbolzens (22, 222) gepresst wird, sowie ein Spannelement (62) enthält, mit dem eine Reibungskraft durch Spannen des Presselementes (61) erzeugt wird.

## Revendications

1. Étrier de frein (20) comprenant :
une paire de leviers d'étrier (40, 50), chaque levier d'étrier (40, 50) retenant une plaquette de frein (12) ;
un actionneur (15) pour délivrer en sortie une force pour faire tourner les leviers d'étrier (40, 50) de telle sorte que les leviers d'étrier (40, 50) appuient sur un disque (11) ;
un corps (30) retenant les leviers d'étrier (40, 50) d'une manière rotative et retenant l'actionneur (15) ;
un support (21) attaché de manière fixe à un bogie ; et
une goupille de couplage (22) couplant le corps (30) au support (21) de telle sorte que le corps (30) et le support (21) sont rotatifs l'un par rapport à l'autre autour d'un axe de rotation s'étendant dans une direction longitudinale des leviers d'étrier (40, 50) ;
**caractérisé en ce que** l'étrier de frein (20) comprend une unité d'application de friction (60) pénétrée par la goupille de couplage (22), l'unité d'application de friction (60) étant configurée pour restreindre une rotation du corps (30) en générant une friction coulissante au niveau d'une surface de contact de l'unité d'application de friction (60) où l'unité d'application de friction (60) touche le corps (30) ou le support (21).

2. Étrier de frein (20) comprenant :
une paire de leviers d'étrier (40, 50), chaque levier d'étrier (40, 50) retenant une plaquette de frein (12) ;
un actionneur (15) pour délivrer en sortie une force pour faire tourner les leviers d'étrier (40, 50) de telle sorte que les leviers d'étrier (40, 50) appuient sur un disque (11) ;
un corps (30) retenant les leviers d'étrier (40, 50) d'une manière rotative et retenant l'actionneur (15) ;
un support (21) attaché de manière fixe à un bogie ; et
une goupille de couplage (22, 222) supportant le corps (30) de telle sorte que le corps (30) est rotatif par rapport au support (21) autour d'un axe de rotation s'étendant dans une direction longitudinale des leviers d'étrier (40, 50) ;
dans lequel l'étrier de frein (20) comprend une unité d'application de friction (60) configurée pour restreindre une rotation de la goupille de couplage (22, 222) en générant une friction coulissante au niveau d'une surface de contact de l'unité d'application de friction (60) où l'unité d'application de friction (60) touche une extrémité de la goupille de couplage (22, 222) dans une direction axiale, **caractérisé en ce que** l'unité d'application de friction (60) est disposée dans le corps (30) ou le support (21).

3. Étrier de frein (20) selon la revendication 1, dans lequel l'unité d'application de friction (60) est disposée dans le support (21).

4. Étrier de frein (20) selon la revendication 1 ou 3, dans lequel l'unité d'application de friction (60) comporte un élément de pression (61) pour générer la friction coulissante lorsqu'il est pressé contre le support (21) ou le corps (30) et un élément de mise sous tension (62) pour générer une force de friction en mettant sous tension l'élément de pression (61).

5. Étrier de frein (20) selon la revendication 4, dans lequel l'élément de pression (61) et l'élément de mise sous tension (62) sont pénétrés par la goupille de couplage (22).

6. Étrier de frein (20) selon la revendication 4 ou 5, comprenant
des éléments de contact (23, 24) touchant l'élément de pression (61), les éléments de contact (23, 24) étant constitués d'un matériau plus souple que l'élément de pression (61).

7. Étrier de frein (20) selon l'une quelconque des revendications 4 à 6,
dans lequel le support (21) retient la goupille de couplage (22) à ses extrémités respectives,
dans lequel une première partie d'extrémité (22A) de la goupille de couplage (22) a un diamètre inférieur à celui d'une seconde partie d'extrémité (22B) opposée à la première partie d'extrémité (22A), et
dans lequel l'élément de mise sous tension (62) entoure de manière appropriée une périphérie extérieure de la première partie d'extrémité (22A).

8. Étrier de frein (20) selon la revendication 2, dans lequel l'unité d'application de friction (60) comporte un élément de pression (61) pour générer la friction coulissante lorsqu'il est pressé contre l'extrémité de la goupille de couplage (22, 222) et un élément de mise sous tension (62) pour générer une force de friction en mettant sous tension l'élément de pression (61).
